# EUROPÄISCHE PATENTSCHRIFT

(11) **EP 2 805 605 B1**
(45) Veröffentlichungstag und Bekanntmachung des Hinweises auf die Patenterteilung: **06.04.2016**
(21) Anmeldenummer: 14001624.7
(22) Anmeldetag: 08.05.2014
(51) Int. Cl.: A01G 13/02

(54) **Überdachung für Obstanlagen**
Canopy for orchards
Couverture pour verger

(30) Priorität: 21.05.2013 DE 102013008469
(43) Veröffentlichungstag der Anmeldung: 26.11.2014
(73) Patentinhaber: Brändlin, Oswald, 79588 Efringen-Kirchen (DE)
(72) Erfinder: Brändlin, Oswald, 79588 Efringen-Kirchen (DE)
(74) Vertreter: Zimmermann, Günter

(56) Entgegenhaltungen:
- EP-B1- 2 183 961
- AT-B- 398 816

## Beschreibung

Die Erfindung bezieht sich auf eine Überdachung für Obstanlagen mit mehreren Pfostenreihen und einem quer zu den Pfostenreihen verlaufenden Draht oder Stahlseil und mit einer Folie oder einem Netz und mit einer Stange oder einem Rohr, auf welche(s) die Folie oder das Netz aufwickelbar ist, und mit mindestens einem Verbindungsmittel, welches die Stange oder das Rohr mit dem Draht oder dem Stahlseil verbindet.

Eine derartige Überdachung ist durch die EP 2 183 961 B1 bekannt. Bei dieser bekannten Folienüberdachung ist das Rohr mit dem Querdraht über Gummischläuche verbunden, welche sich im Laufe der Zeit bei starker Belastung an dem Querdraht nachteiligerweise durchscheuern können.

Die Aufgabe der Erfindung wird somit darin gesehen, die Überdachung der eingangs genannten Art derart weiterzuentwickeln, dass die Überdachung auch langfristig zuverlässig haltbar ist und kostengünstig hergestellt werden kann.

Zur Lösung dieser Aufgabe wird bei einer Überdachung gemäß dem Oberbegriff des Anspruchs 1 erfindungsgemäß vorgeschlagen, dass das mindestens eine Verbindungsmittel ein auf die Stange oder das Rohr aufsteckbares oder aufschiebbares Befestigungselement und ein Spannelement aufweist, welches das Befestigungselement mit dem Draht oder dem Stahlseil verspannt.

Das Verbindungsmittel besteht nun nicht mehr aus einem einzigen Teil wie im Stand der Technik, welches an dem Rohr bei Bewegung scheuern kann, sondern aus zwei Teilen, nämlich einem Befestigungselement, welches mit der Stange oder dem Rohr verbunden ist, und einem Spannelement, welches das Befestigungselement mit dem Draht oder dem Stahlseil verspannt. Das Befestigungselement kann beispielsweise eine Hülse sein und beispielsweise aus Kunststoff bestehen. Dadurch kommt das Spannelement nicht mehr in direktem Kontakt mit der Stange oder dem Rohr, sodass ein Durchscheuern des Spannelementes an der Stange oder dem Rohr vermieden wird. Auch das Befestigungselement wird nicht mehr beschädigt, da es durch die Verspannung ortsfest auf der Stange oder dem Rohr angeordnet ist. Das Spannelement kann beispielsweise aus einem Federstahl hergestellt sein, wodurch sich eine stabile und auch langfristig haltbare Befestigung ergibt, so dass insgesamt die Überdachung auch langfristig haltbar ist.

Damit der Draht oder das Stahlseil möglichst einfach und schnell mit der Stange oder dem Rohr verbunden werden kann, sieht eine Ausführungsform der Erfindung vor, dass das Spannelement einen ersten Einhängebereich und einen zweiten Einhängebereich zum Einhängen in den Draht oder das Stahlseil neben zwei gegenüberliegenden Seiten des Befestigungselementes aufweist. Beim Verbinden wird das Spannelement mit den beiden Einhängebereichen in das Stahlseil eingehängt und dann durch eine Schwenkbewegung über das Befestigungselement geschoben, wodurch sich eine Verspannung des Spannelementes mit dem Befestigungselement ergibt. Das Spannelement kann entweder nur punktförmig mit dem Befestigungselement in Kontakt sein oder auch über einen größeren Bereich mit dem Befestigungselement in Kontakt sein. Damit eine zuverlässige Verspannung gewährleistet ist, sieht eine weitere Ausgestaltung der Erfindung vor, dass das Spannelement ein zwischen dem ersten Einhängebereich und dem zweiten Einhängebereich angeordnetes Mittelteil aufweist, welches in gespanntem Zustand an dem Befestigungselement anliegt. Vorteilhafterweise ist das Mittelteil des Spannelementes U-förmig ausgebildet und das Befestigungselement ist eine im Querschnitt rechteckige Hülse und das Rohr ist ein Vierkantrohr. Damit liegt das Mittelteil des Spannelementes passgenau an dem Befestigungselement an, wodurch eine zuverlässige und auch langfristig haltbare Verspannung gegeben ist. Um das Spannelement in einfacher Weise zu bedienen, sieht eine weitere Ausgestaltung der Erfindung vor, dass das Spannelement einen Betätigungsgriff aufweist.

Damit das Befestigungselement in einfacher Weise auf die Stange oder das Rohr aufgesteckt oder aufgeschoben werden kann, sieht eine weitere Ausführungsform der Erfindung vor, dass das Befestigungselement an einer Seite einen Schlitz aufweist. Der Schlitz kann nur teilweise in einer Seite angebracht sein oder er kann auch durchgehend durch die gesamte Seite verlaufen. Damit wird eine gewisse Aufbiegbarkeit und damit eine Vergrößerung des Querschnitts des Befestigungselementes erreicht, wodurch das Anbringen des Befestigungselementes auf dem Rohr erleichtert wird. Um ein Verrutschen des Drahtes oder des Stahlseils gegenüber dem Befestigungselement zu vermeiden, sieht eine weitere Ausführungsform der Erfindung vor, dass das Befestigungselement einen Aufnahmebereich für den Draht oder das Stahlseil aufweist. Der Aufnahmebereich kann jegliche erdenkliche Form haben, damit ein seitliches Verrutschen des Stahlseils vermieden wird. Vorteilhafterweise weist der Aufnahmebereich eine Vertiefung oder zwei Vorsprünge auf, in dem oder zwischen denen der Draht oder das Stahlseil verläuft.

Damit auch das Spannelement gegenüber einem Verrutschen auf dem Befestigungselement gesichert ist, sieht eine weitere Ausgestaltung der Erfindung vor, dass das Befestigungselement Führungselemente für das Spannelement aufweist. Die Führungselemente können vorteilhafterweise Rillen oder Vorsprünge sein, in denen oder zwischen denen das Spannelement verläuft.

Die Erfindung wird nachstehend anhand der Zeichnung näher erläutert. Die Zeichnung zeigt ein Ausführungsbeispiel der Erfindung. Hierbei stellen dar:

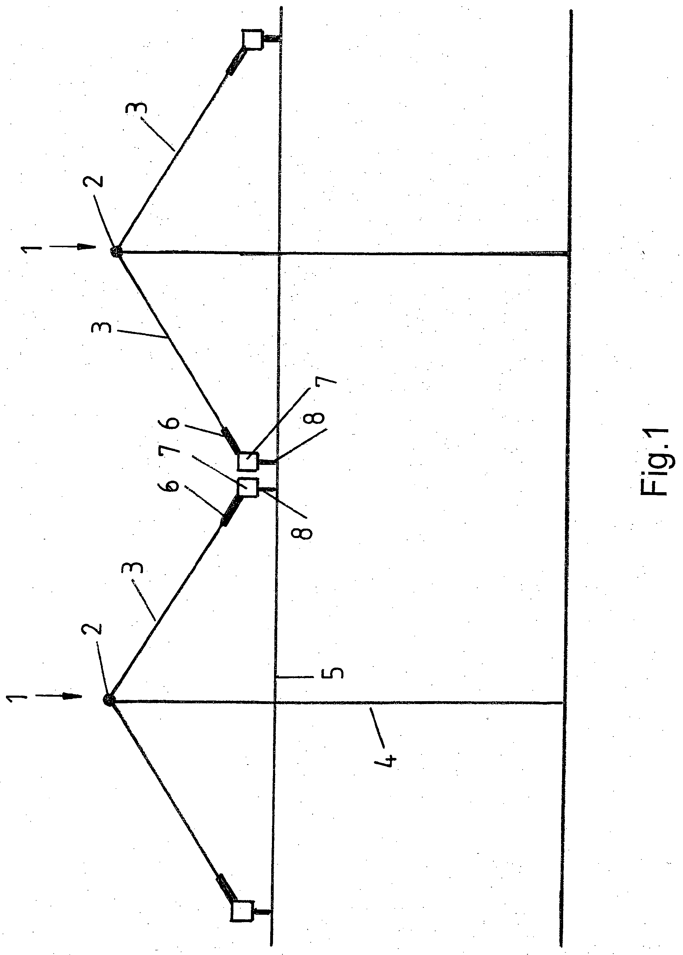

Fig.1 einen schematischen abgebrochenen Querschnitt,

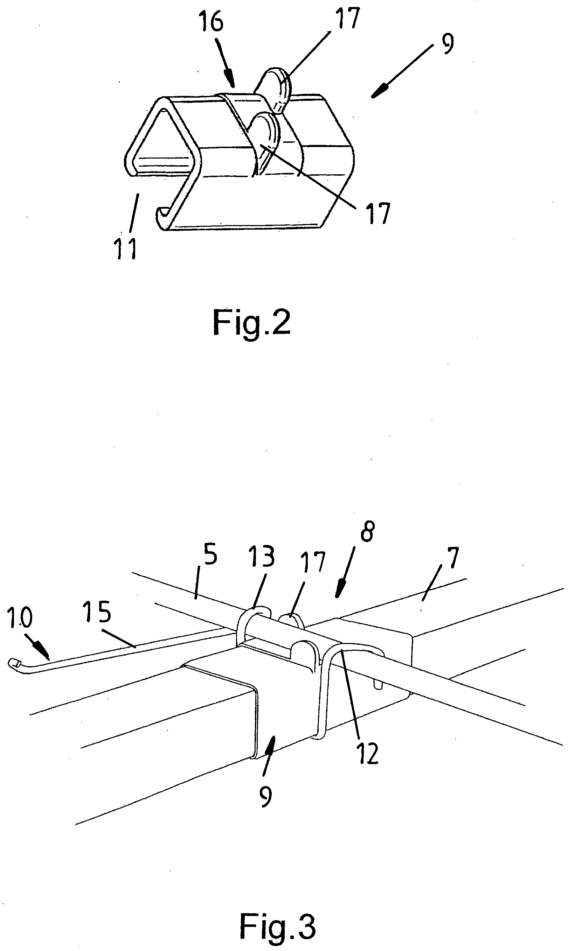

Fig.2 eine perspektivische Ansicht des Befestigungselements,
Fig.3 eine perspektivische Ansicht von der Unterseite im Bereich des Verbindungsmittels mit Rohr und Stahlseil und

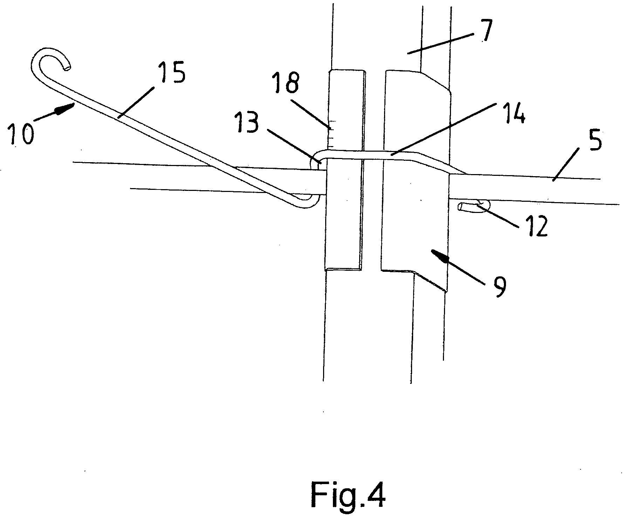

Fig.4 eine perspektivische Ansicht gemäß Fig.3 von der Oberseite.

Die Überdachung weist mehrere nebeneinander angeordnete Pfostenreihen 1 auf. Über jede Pfostenreihe 1 verläuft ein Firstdraht 2, in welchem eine Folie 3 mit ihrem firstnahen Ende eingenäht ist. Ein zweiter Firstdraht 2 für die Folie 3 auf der gegenüberliegenden Seite verläuft ebenfalls über die Pfostenreihe 1. Die beiden Firstdrähte 2 sind mit dem oberen Ende jedes Pfostens 4 über eine Firsthalterung verbunden. Zusätzlich zu dem Firstdraht 2 verläuft quer dazu an jedem Pfosten 4 ein Stahlseil 5, welches sich etwa in drei Viertel Höhe des Pfostens 4 befindet. Entlang jeder Pfostenreihe 1 gesehen sind somit eine Vielzahl von Querseilen 5 hintereinander angeordnet. Am bodennahen Ende der Folie 3 ist die Folie mittels vieler elastischer Verbindungselemente 6 mit einem Rohr 7 verbunden. Jedes Verbindungselement 6 ist durch eine Öse in der Folie 3 geführt und das Rohr 7 ist in das schlauchförmige Verbindungselement 6 eingeknotet. Das Rohr 7, welches ein Vierkantrohr ist, ist mit dem Stahlseil 5 über mindestens ein Verbindungsmittel 8 verbunden. Das Verbindungsmittel 8 besteht aus einem Befestigungselement 9 und einem Spannelement 10. Das Befestigungselement 9 besteht aus Kunststoff und hat die Form einer im Querschnitt rechteckigen und länglichen Hülse, welche auf das Rohr 7 aufschiebbar ist. Die Wandstärke der Hülse beträgt etwa 3 mm und die Länge etwa 50 mm. Um das Aufschieben zu erleichtert, weist das Befestigungselement 9 an einer Seite einen durchgehenden Schlitz 11 auf. Das Spannelement 10 ist aus Federstahldraht mit einem Drahtdurchmesser von etwa 3 mm. Es ist mehrfach gebogen und weist einen ersten Einhängebereich 12 und einen zweiten Einhängebereich 13 zum Einhängen in das Stahlseil 5 neben zwei gegenüberliegenden Seiten des Befestigungselementes 9 auf. Der erste Einhängebereich 12 und der zweite Einhängebereich 13 sind jeweils hakenförmig oder U-förmig ausgebildet. Zwischen dem ersten Einhängebereich 12 und dem zweiten Einhängebereich 13 weist das Spannelement 10 ein Mittelteil 14 auf, welches in gespanntem Zustand an dem Befestigungselement 9 anliegt. Das Mittelteil 14 ist U-förmig derart ausgebildet, dass es in gespanntem Zustand des Spannelementes 10 passgenau an dem Befestigungselement 9 anliegt. Ein Schenkel es U-förmigen ersten Einhängebereichs 12 geht dabei in einen Schenkel des U-förmigen Mittelteils 14 über und der andere Schenkel des U-förmigen Mittelteils 14 geht dabei in einen Schenkel des zweiten Einhängebereichs 13 über. Die U-Form des Mittelteils 14 ist entgegengesetzt zur U-Form sowohl des ersten Einhängebereichs 12 als auch des zweiten Einhängebereichs 13 ausgerichtet. Der andere Schenkel des zweiten Einhängebereichs 13 ist verlängert ausgeführt und bildet einen Betätigungsgriff 15, mit welchem das Spannelement 10 an dem Stahlseil 5 angebracht wird und dann durch eine Schwenkbewegung in den gespannten Zustand gebracht wird. Das freie Ende des Betätigungsgriffs 15 weist eine Art Öse auf, welche mit der Öse eines daneben angeordneten Betätigungsgriffs 15 eines Spannelements 10 für ein parallel angeordnetes Rohr 7 für eine angrenzende Pfostenreihe 1 verbunden werden kann. Dadurch ist das Spannelement 10 gegen ein Verrutschen auf dem Stahlseil 5 gesichert.

Das Befestigungselement 9 weist an seiner dem Schlitz 11 gegenüberliegenden Seite einen Aufnahmebereich 16 zur Aufnahme oder Führung des Stahlseils 5 auf.

Der Aufnahmebereich 16 weist zwei sich schräg gegenüberstehende Vorsprünge 17 in Form von Laschen auf, zwischen denen das Stahlseil 5 verläuft. Weiterhin weist das Befestigungselement 9 Führungselemente 18 auf, in welchen das Mittelteil 14 des Spannelementes 10 in gespanntem Zustand gehalten wird. Die Führungselemente 18 können Rillen oder Vorsprünge sein und sind an derjenigen Seite des Befestigungselementes 9 angebracht, welche auch den Schlitz 11 aufweist.

Zum Verbinden des Rohrs 7 mit dem Stahlseil 5 wird das Befestigungselement 9 auf das Rohr 7 aufgeschoben. Das Rohr 7 liegt dann auf dem Stahlseil 5, wobei das Stahlseil 5 in dem Aufnahmebereich 16 geführt ist. Anschließend wird das Stahlseil 5 von oben her in den ersten Einhängebereich 12 eingehängt. Dann wird das Spannelement 10 mittels des Betätigungsgriffs 15 über das Rohr 7 und anschließend nach unten unter dem Stahlseil 5 hindurchgeführt und dann wieder nach oben geführt, wobei sich das Stahlseil 5 in den zweiten Einhängebereich 13 einhängt. Wenn sich der Betätigungsgriff 15 wieder oberhalb des Rohres 7 befindet und das Stahlseil 5 vollständig im zweiten Einhängebereich 13 angeordnet ist, dann ist der gespannte Zustand des Spannelementes 10 erreicht und das Rohr 7 ist zuverlässig und stabil mit dem Stahlseil 5 verbunden. Durch das Befestigungselement 9 ist das Spannelement 10 vor einem direkten Kontakt mit dem Rohr 7 geschützt, so dass auch bei längerem Betrieb der erfindungsgemäßen Überdachung keine Beschädigung oder ein Durchscheuern des Spannelementes 10 an dem Rohr 7 passieren kann. Auch das Befestigungselement 9 ist vor Beschädigung oder Durchscheuern geschützt, da es aus einem stabilen Kunststoffmaterial besteht und durch die Verspannung annähernd ortsfest auf dem Rohr 7 angeordnet ist. Um das Rohr 7 in eine gewünschte Position zu bringen, ist es dennoch möglich, mit etwas Aufwand das Rohr 7 innerhalb des Befestigungselementes 9 zu verschieben. Da das Verbindungsmittel 8 lediglich aus einem Kunststoffformteil und einem gebogenen Federstahldraht besteht, ist das Verbindungsmittel auch kostengünstig herzustellen.

## Patentansprüche

1. Überdachung für Obstanlagen mit mehreren Pfostenreihen (1) und einem quer zu den Pfostenreihen (1) verlaufenden Draht oder Stahlseil (5) und mit einer Folie (3) oder einem Netz und mit einer Stange oder einem Rohr (7), auf welche(s) die Folie (3) oder das Netz aufwickelbar ist, und mit mindestens einem Verbindungsmittel (8), welches die Stange oder das Rohr (7) mit dem Draht oder dem Stahlseil (5) verbindet,
**dadurch gekennzeichnet,**
**dass** das mindestens eine Verbindungsmittel (8) ein auf die Stange oder das Rohr (7) aufsteckbares oder aufschiebbares Befestigungselement (9) und ein Spannelement (10) aufweist, welches das Befestigungselement (9) mit dem Draht oder dem Stahlseil (5) verspannt.

2. Überdachung nach Anspruch 1,
**dadurch gekennzeichnet,**
**dass** das Spannelement (10) einen ersten Einhängebereich (12) und einen zweiten Einhängebereich (13) zum Einhängen in den Draht oder das Stahlseil (5) neben zwei gegenüberliegenden Seiten des Befestigungselementes (9) aufweist.

3. Überdachung nach Anspruch 1 oder 2,
**dadurch gekennzeichnet,**
**dass** das Spannelement (10) ein zwischen dem ersten Einhängebereich (12) und dem zweiten Einhängebereich (13) angeordnetes Mittelteil (14) aufweist, welches in gespanntem Zustand an dem Befestigungselement (9) anliegt.

4. Überdachung nach Anspruch 3,
**dadurch gekennzeichnet,**
**dass** das Mittelteil (14) des Spannelementes (10) U-förmig ausgebildet ist und das Befestigungselement (9) eine im Querschnitt rechteckige Hülse ist und das Rohr (7) ein Vierkantrohr ist.

5. Überdachung nach einem der vorhergehenden Ansprüche,
**dadurch gekennzeichnet,**
**dass** das Spannelement (10) einen Betätigungsgriff (15) aufweist.

6. Überdachung nach einem der vorhergehenden Ansprüche,
**dadurch gekennzeichnet,**
**dass** das Befestigungselement (9) an einer Seite einen Schlitz (11) aufweist.

7. Überdachung nach einem der vorhergehenden Ansprüche,
**dadurch gekennzeichnet,**
**dass** das Befestigungselement (9) einen Aufnahmebereich (16) für den Draht oder das Stahlseil (5) aufweist.

8. Überdachung nach Anspruch 7,
**dadurch gekennzeichnet,**
**dass** der Aufnahmebereich (16) eine Vertiefung oder zwei Vorsprünge (17) aufweist, in dem oder zwischen denen der Draht oder das Stahlseil (5) verläuft.

9. Überdachung nach einem der vorhergehenden Ansprüche,
**dadurch gekennzeichnet,**
**dass** das Befestigungselement (9) Führungselemente (18) für das Spannelement (10) aufweist.

10. Überdachung nach Anspruch 9,
**dadurch gekennzeichnet,**
**dass** die Führungselemente (18) Rillen oder Vorsprünge sind.

## Claims

1. Canopy for fruit plants, with a plurality of post rows (1) and a wire or steel cable (5) running transversely to the post rows (1), and with a film (3) or a net and with a rod or a tube (7) on which the film (3) or net can be wound, and with at least one connecting means (8) which connects the rod or tube (7) to the wire or steel cable (5),
**characterized in that**
the at least one connecting means (8) has a fixing element (9) which can be pushed or pressed onto the rod or tube (7), and a clamping element (10) which clamps the fixing element (9) to the wire or steel cable (5).

2. Canopy according to claim 1, **characterized in that** the clamping element (10) has a first suspension region (12) and a second suspension region (13) situated next to opposite sides of the fixing element (9), for suspension from the wire or steel cable (5).

3. Canopy according to claim 1 or 2, **characterized in that** between the first suspension region (12) and the second suspension region (13), the clamping element (10) has a middle part (14) which in a clamped state lies against the fixing element (9).

4. Canopy according to claim 3, **characterized in that** the middle part (14) of the clamping element (10) is U-shaped, the fixing element (9) is a sleeve with rectangular cross-section, and the tube (7) is a rectangular tube.

5. Canopy according to any of the preceding claims, **characterized in that** the clamping element (10) has an actuating handle (15).

6. Canopy according to any of the preceding claims, **characterized in that** the fixing element (9) has a slot (11) on one side.

7. Canopy according to any of the preceding claims, **characterized in that** the fixing element (9) has a receiving region (16) for the wire or steel cable (5).

8. Canopy according to claim 7, **characterized in that** the receiving region (16) has a recess or two protrusions (17) in or between which the wire or steel cable (5) runs.

9. Canopy according to any of the preceding claims, **characterized in that** the fixing element (9) has guide elements (18) for the clamping element (10).

10. Canopy according to claim 9, **characterized in that** the guide elements (18) are grooves or protrusions.

## Revendications

1. Couverture pour vergers, avec plusieurs rangées de poteaux (1) et avec un fil métallique ou un câble en acier (5) s'étendant transversalement aux rangées de poteaux (1), et avec un film plastique (3) ou un filet, et avec une barre ou un tube (7) sur lequel le film plastique (3) peut être enroulé, et avec au moins un moyen de liaison (8) qui relie la barre ou le tube (7) au fil métallique ou au câble en acier (5), **caractérisée en ce que** le moyen de liaison (8) au moins unique présente un élément de fixation (9) pouvant être emboîté ou enfilé sur la barre ou le tube (7), et un élément de serrage (10) qui assemble avec serrage l'élément de fixation (9) avec le fil métallique ou le câble en acier (5).

2. Couverture selon la revendication 1, **caractérisée en ce que** l'élément de serrage (10) présente une première région d'accrochage (12) et une deuxième région d'accrochage (13) pour l'accrocher sur le fil métallique ou le câble en acier (5) à côté de deux côtés opposés de l'élément de fixation (9).

3. Couverture selon la revendication 1 ou 2, **caractérisée en ce que** l'élément de serrage (10) présente une partie centrale (14), disposée entre la première région d'accrochage (12) et la deuxième région d'accrochage (13), qui s'applique dans l'état serré contre l'élément de fixation (9).

4. Couverture selon la revendication 3, **caractérisée en ce que** la partie centrale (14) de l'élément de serrage (10) est réalisée en forme de U, et l'élément de fixation (9) est un manchon de section rectangulaire et le tube (7) est un tube carré.

5. Couverture selon l'une des revendications précédentes, **caractérisée en ce que** l'élément de serrage (10) présente une poignée d'actionnement (15).

6. Couverture selon l'une des revendications précédentes, **caractérisée en ce que** l'élément de fixation (9) présente sur un côté une fente (11).

7. Couverture selon l'une des revendications précédentes, **caractérisée en ce que** l'élément de fixation (9) présente une région réceptrice (16) pour le fil métallique ou le câble en acier (5).

8. Couverture selon la revendication 7, **caractérisée en ce que** la région réceptrice (16) présente un renfoncement ou deux saillies (17), dans lequel ou entre lesquelles s'étend le fil métallique ou le câble en acier (5).

9. Couverture selon l'une des revendications précédentes, **caractérisée en ce que** l'élément de fixation (9) présente des éléments de guidage (18) pour l'élément de serrage (10).

10. Couverture selon la revendication 9, **caractérisée en ce que** les éléments de guidage (18) sont des rainures ou des saillies.
